**Europäisches Patentamt**

**European Patent Office**

**Office européen des brevets**

(11) Numéro de publication : **0 469 967 B1**

(12) **FASCICULE DE BREVET EUROPEEN**

(45) Date de publication du fascicule du brevet :
**12.04.95 Bulletin 95/15**

(21) Numéro de dépôt : **91402079.7**

(22) Date de dépôt : **25.07.91**

(51) Int. Cl.⁶ : **F41G 3/22**, G01D 5/20

(54) **Radiateur et capteur magnétiques pour la détermination de la position et de l'orientation d'un mobile.**

(30) Priorité : **03.08.90 FR 9009955**

(43) Date de publication de la demande :
**05.02.92 Bulletin 92/06**

(45) Mention de la délivrance du brevet :
**12.04.95 Bulletin 95/15**

(84) Etats contractants désignés :
**DE FR GB IT NL**

(56) Documents cités :
**US-A- 4 244 120**
**US-A- 4 287 809**

(73) Titulaire : **SEXTANT AVIONIQUE**
**5/7 rue Jeanne Braconnier**
**Parc Tertiaire**
**F-92368 Meudon la Forêt Cédex (FR)**

(72) Inventeur : **Voisin, Gérard**
**27 rue Rosemonde Gérard**
**F-33160 Saint Medard en Jalles (FR)**

(74) Mandataire : **Bloch, Gérard et al**
**2, square de l'Avenue du Bois**
**F-75116 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

Le principe de la détection de position électromagnétique est bien connu pour déterminer la position et l'orientation d'un mobile, solide, dans un repère de référence.L'une des applications de ce principe est la détermination de la direction de visée d'un viseur de casque qu'un fantassin, un conducteur ou un pilote de char ou d'aéronef, a placé sur sa tête, pour y asservir une arme, un missile ou une caméra de pilotage, par exemple.

Ce principe de détection met en oeuvre un émetteur, ou radiateur, de champ magnétique, lié au repère de référence, ou référentiel, dans lequel sont effectuées les mesures, un récepteur, ou capteur, de champ magnétique, fixé au mobile dont la position et l'orientation doivent être déterminées, et des circuits électroniques de traitement incluant des amplificateurs analogiques, un calculateur et des algorithmes de traitement.

Le radiateur doit au mieux satisfaire aux conditions de la théorie dipolaire, dans laquelle le système de coordonnées pour la description mathématique de la radiation est une sphère centrée sur le dipole et la fonction de Green d'espace libre ne dépend que de la coordonnée radiale.

Le capteur de champ magnétique doit être le plus ponctuel possible. L'émetteur rayonne, séquentiellement ou par multiplexage, un champ suivant deux ou trois axes orthogonaux et le capteur détecte séquentiellement les composantes de ce champ selon trois ou deux axes orthogonaux, l'émission et la réception s'effectuant généralement chacune suivant trois axes. Le capteur fournit ainsi, par axe d'émission, trois mesures, soit au total neuf qu'on organise en une matrice 3x3, à partir de laquelle les algorithmes de traitement fournissent la position et l'orientation du capteur par rapport au radiateur.

On remarquera ici que la détermination de la position et de l'orientation du capteur implique la détermination de six variables - les trois coordonnées cartésiennes, le gisement, le site et le roulis - et que six mesures au moins sont donc nécessaires. Si l'émission n'est effectuée que suivant deux axes, la réception doit par conséquent l'être suivant trois, et inversement.

Le document FR-A-2 458 838/7914441 décrit un système de mise en oeuvre du principe de détection de position électromagnétique. On s'y reportera utilement. Schématiquement, le radiateur et le capteur sont, chacun, constitués d'un groupe de trois bobines identiques commandées en courant et disposées respectivement le long de trois axes orthogonaux. Pour réunir au mieux les conditions du dipole, tant pour le radiateur que pour le capteur, les dimensions des bobines doivent être les plus petites possibles. Il est même intéressant, toujours dans le même but, de substituer à chaque bobine deux demi-bobines parcourues par le même courant. On pourrait aussi considérer, comme radiateur et capteur, une sphère en matériau magnétique entourée de trois bobines orthogonales.

En fait, dans les systèmes mis en oeuvre jusqu'ici pour la détection de position électromagnétique, les radiateurs et capteurs ne satisfaisaient pas pleinement aux conditions de la théorie dipolaire et l'objet de la présente invention est de mieux les approcher encore.

Il est clair qu'il ne peut y avoir de détection de position électromagnétique sans l'un ou l'autre des deux éléments de la paire radiateur-capteur.

### Le Capteur

Dans un référentiel déterminé, le champ magnétique en un point donné est représenté par un vecteur $\vec{H}$. Dans ce référentiel, les axes de sensibilité du capteur sont représentés par un vecteur $\vec{C}$. Les résultats des mesures effectuées par le capteur peuvent être disposés sous forme de matrice M correspondant au produit scalaire $\vec{C} . \vec{H}$

$$\vec{C} . \vec{H} = C^T H = M$$

H étant la matrice du champ et $C^T$ la matrice transposée de la matrice C des axes de sensibilité du capteur.

Le capteur, dans le référentiel, peut subir soit une translation soit une rotation. Considérons celle-ci, exprimée par une matrice de rotation R. La matrice des axes de sensibilité du capteur devient RC et celle des mesures $M_R$.

$$M_R = C^T R^T H$$

Si les trois axes du capteur sont orthonormés,

$$C = \begin{pmatrix} 1 & 0 & 0 \\ 0 & 1 & 0 \\ 0 & 0 & 1 \end{pmatrix} = (1)$$

Par conséquent

$$M_R = R^T H$$

H dépendant de la position du capteur et $M_R$ de sa position et de son orientation.

En présence de perturbations magnétiques, par exemple provoquées par les masses métalliques d'un avion, les algorithmes de traitement reposent sur des relevés cartographiques. Pour obtenir cette cartographie préalable, on procède à des mesures du champ par le capteur en de multiples points de l'espace auxquels on associe donc des matrices de mesures perturbées. Soit $M_C$ l'une de celles-ci. Si le capteur subit une rotation R, la matrice de mesures devrait devenir

$$M_R = R^T M_C$$
$$M_R^T = M_C^T R$$
$$M_R^T M_R = M_C^T R R^T M_C$$
$$= M_C^T M_C$$

Le produit matriciel $M_R^T M_R$ est donc invariant en rotation et représentatif du point considéré.

La cartographie vise à déterminer la fonction f de correspondance entre $M_C$ et $M_C^T M_C$.

Lors des mesures ultérieures, à une matrice $M_R$ correspond le produit $M_R^T M_R$. Comme $M_R^T M_R = M_C^T M_C$, on en déduit $M_C$ par la fonction f, donc la position du capteur. Pour déterminer la matrice de rotation R, c'est-à-dire l'orientation des axes du capteur, connaissant $M_R$ et $M_C$, on calcule R à partir de l'équation $M_R = R^T M_C$, soit

$$R = M_C M_R^{-1}$$

L'algorithme développé ci-dessus est donc basé sur l'invariance de $M^T M$ en rotation. En réalité, cette invariance n'est vérifiée que pour un capteur parfaitement ponctuel qui jusqu'ici n'a jamais été proposé.

De façon tout-à-fait surprenante, la demanderesse a constaté que

un capteur magnétique pour la détermination de la position et de l'orientation d'un mobile, comprenant au moins deux paires de bobines disposées respectivement le long de deux axes orthogonaux de réception, caractérisé par le fait que les bobines de chaque paire sont des bobines d'Helmholtz, satisfaisait au mieux aux conditions de la théorie dipolaire.

On rappellera ici que les bobines dites d'Helmholtz sont deux bobines à spires circulaires, de même rayon moyen, s'étendant respectivement dans deux plans parallèles écartés l'un de l'autre d'une distance égale au rayon des spires des bobines, le nombre de spires de chaque bobine lui conférant une épaisseur petite par rapport à son diamètre.

La présente invention est donc une application inattendue des bobines d'Helmholtz.

Sur la base de l'équivalence, pour une antenne, entre l'émission et la réception, la demanderesse a réalisé deux expériences montrant tout l'intérêt de l'invention.

Pour une pluralité de paires de bobines identiques, à une spire chacune, dans deux plans parallèles fixes, et de diamètres respectifs $\phi$ différents, la demanderesse a calculé les erreurs relatives, entre les champs magnétiques réellement produits $\vec{H_P}$ par ces paires de spires utilisées en émission à une distance fixe déterminée et les champs théoriques $\vec{H_D}$ produits à la même distance par un dipôle placé au même endroit que ces bobines et calculés de façon classique, en fonction d'un angle de gisement $\alpha$ variant de 0 à 90 degrés.

La première expérience a porté sur les erreurs

$$\mathcal{E}_m = \frac{|\vec{H_P}| - |\vec{H_D}|}{|\vec{H_D}|}$$

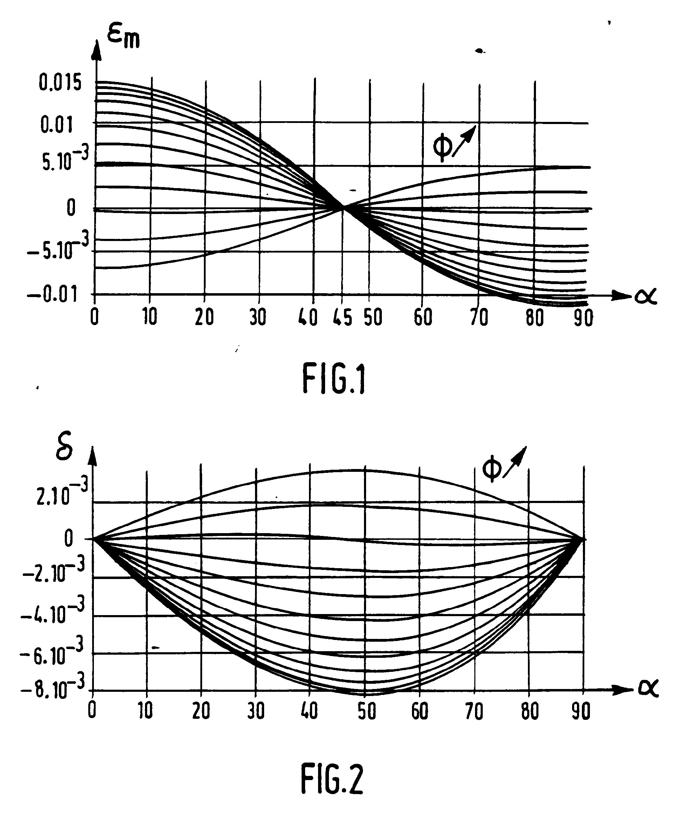

du module des champs et est illustrée sur la figure 1 par le faisceau de courbes relatives à des paires de spires de diamètres croissant avec les ordonnées à droite du point [$\varepsilon_m = 0$, $\alpha = 45$ degrés] qui est un point de concours de toutes les courbes du faisceau. L'une des courbes du faisceau est sensiblement confondue avec la droite d'ordonnée nulle $\varepsilon_m = 0$ et correspond aux conditions d'Helmholtz.

3

La deuxième expérience a porté sur les erreurs angulaires $\delta$ de l'orientation des champs et est illustrée sur la figure 2 par le faisceau de courbes relatives à des paires de spires de diamètres croissant avec les ordonnées et qui s'étendent toutes entre les points [ $\delta$ = 0, $\alpha$ = 0 degré] et [ $\delta$ = 0, $\alpha$ = 90 degrés]. La courbe correspondant aux conditions d'Helmholtz est encore confondue avec la droite $\delta$ = 0.

Chaque bobine du capteur de l'invention comporte avantageusement une pluralité de spires et ce sont les spires centrales des bobines de chaque paire qui satisfont aux conditions d'Helmholtz.

Dans ce cas, le diamètre des spires des bobines d'une paire peut être suffisamment petit et le nombre de spires, pour maintenir une bonne sensibilité, suffisamment grand pour que ces bobines soient adjacentes et n'en forment plus qu'une seule.

## Le radiateur

Le problème spécifique posé par les radiateurs magnétiques est celui de leur interchangeabilité à laquelle il faut souvent recourir. Changer de radiateur implique, normalement, de procéder à de nouveaux relevés cartographiques. Or la réalisation d'une cartographie est une opération particulièrement longue qui peut durer plusieurs jours.

La demanderesse a donc cherché à s'affranchir de cette peine et à permettre le changement d'un radiateur par un autre sans avoir à élaborer de nouvelle cartographie.

La préservation d'une cartographie d'un radiateur à un autre impliquerait que les deux radiateurs puissent émettre des champs identiques et qu'il s'agisse donc d'émetteurs aussi ponctuels que possible.

La demanderesse a constaté que

un radiateur magnétique pour la détermination de la position et de l'orientation d'un mobile, comprenant au moins deux paires de bobines disposées respectivement le long de deux axes orthogonaux d'émission, caractérisé par le fait que les bobines de chaque paire sont des bobines d'Helmholtz, permettait de résoudre ce problème.

En effet, et grâce à la ponctualité du radiateur, une différence d'orientation des champs produits par deux radiateurs interchangés peut être facilement corrigée par mélange d'émissions selon les axes du nouveau radiateur, l'optimum étant atteint si le radiateur possède trois axes orthogonaux d'émission. On notera que le mélange d'émission selon les axes du radiateur ne soulève pas de difficulté puisque les émissions dans les trois axes s'effectuent l'une après l'autre.

Ainsi, les caractéristiques essentielles du capteur et du radiateur de l'invention sont les mêmes et c'est dans ce sens qu'il avait été proclamé ci-dessus qu'ils procédaient d'un unique concept inventif.

Naturellement, les expériences présentées à propos du capteur de l'invention s'appliquent tout autant au radiateur de l'invention.

Les bobines du radiateur de l'invention, quant aux diamètres et aux nombres de leurs spires, peuvent avoir naturellement les mêmes caractéristiques que celles du capteur de l'invention.

L'invention sera encore mieux comprise à l'aide de la description suivante du radiateur et du capteur de l'invention, en référence au dessin annexé, sur lequel

- la figure 1 représente un faisceau de courbes représentatives de l'erreur du module de champ magnétique en fonction du gisement, à une distance déterminée d'une paire de spires de diamètres respectivement différents, par rapport au champ produit par un dipole;
- la figure 2 représente un faisceau de courbes représentatives de l'erreur angulaire d'orientation du champ magnétique en fonction du gisement, à une distance déterminée d'une paire de spires de diamètres respectivement différents, par rapport au champ produit par un dipole;
- la figure 3 représente une vue en perspective de la forme de réalisation préférée du radiateur de l'invention;
- la figure 4 représente une demi-vue en coupe du radiateur de la figure 3;
- la figure 5 représente les courbes représentatives de l'erreur relative du module de champ, à trois distances différentes, en fonction du gisement, produit par la première paire de bobines d'axe Ox le long de cet axe Ox du radiateur de la figure 3, par rapport au champ d'un dipole;
- la figure 6 représente les courbes représentatives de l'erreur relative du module de champ, à trois distances différentes, en fonction du gisement, produit par la première paire de bobines d'axe Ox le long de l'axe Oy du radiateur de la figure 3, par rapport au champ du dipole;
- la figure 7 représente les courbes représentatives de l'erreur relative du module de champ, à trois distances différentes, en fonction du gisement, produit par la deuxième paire de bobines d'axe Oy le long de cet axe Oy du radiateur de la figure 3, par rapport au champ d'un dipole;
- la figure 8 représente les courbes représentatives de l'erreur relative du module de champ, à trois distances différentes, en fonction du gisement, produit par la deuxième paire de bobines d'axe Oy le long de l'axe Ox du radiateur de la figure 3, par rapport au champ du dipole;
- la figure 9 représente les courbes représentatives de l'erreur relative du module de champ, à trois distances différentes, en fonction du gisement, produit par la troisième paire de bobines d'axe Oz le long de cet axe Oz du radiateur de la figure 3, par rapport au champ d'un dipole;
- la figure 10 représente les courbes représentatives de l'erreur relative du module de champ, à trois distances différentes, en fonction du gisement, produit par la troisième paire de bobines d'axe Oz le long de l'axe Ox du radiateur de la figure 3, par rapport au champ du dipole;
- la figure 11 représente les courbes représentatives de l'erreur relative du module de champ, à une distance déterminée, en fonction du gisement, produit par la bobine double d'axe Ox, respectivement le long des axes Ox et Oy du capteur de l'invention, par rapport au champ d'un dipole;
- la figure 12 représente les courbes représentatives de l'erreur du module de champ, à une distance déterminée, en fonction du gisement, produit par la paire de bobines d'axe Oy le long des axes Oy et Ox du capteur de l'invention, par rapport au champ d'un dipole et
- la figure 13 représente les courbes représentatives de l'erreur du module de champ, à une distance déterminée, en fonction du gisement, produit par la paire de bobines d'axe Oz le long des axes Oz et Ox du capteur de l'invention, par rapport au champ d'un dipole.

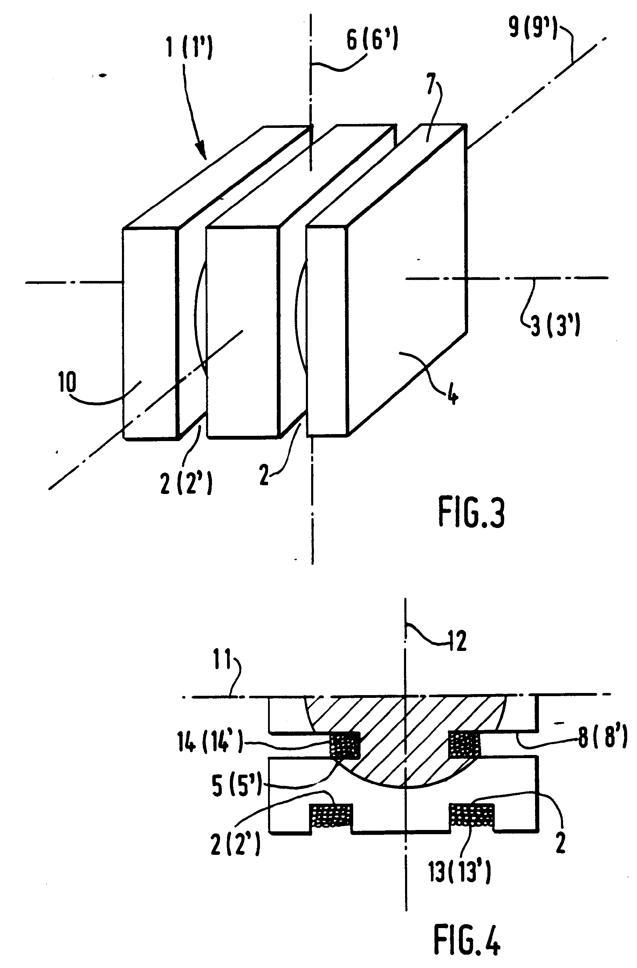

Le radiateur de la figure 4 comporte trois paires de bobines d'Helmholtz sur un support parallélépipèdique, ici cubique, 1 en matériau non magnétique et non conducteur. Les paires de bobines sont imbriquées les unes dans les autres et ont des diamètres différents deux à deux.

Le cube a été adopté ici pour des raisons de facilité mais c'est sa caractéristique de présenter trois axes de symétrie orthogonaux qui est déterminante.

Les bobines des trois paires de bobines sont enroulées respectivement dans trois paires de gorges parallèles deux à deux ménagées parallèlement aux trois plans de symétrie du cube 1, de trois profondeurs respectivement différentes. Les gorges ont ici une section, parallèle à leur axe, rectangulaire.

Le cube 1 comporte une première paire de gorges 2 espacées le long d'un premier axe 3 perpendiculaire aux plans médians des gorges et à la face 4 du cube et passant par le centre du cube. Les gorges 2 sont symétriques par rapport au plan de symétrie 12 du cube. Le cube 1 comporte une deuxième paire de gorges 5 espacées le long d'un second axe 6 perpendiculaire à l'axe 3, aux plans médians des gorges 5 et à la face 7 du cube et passant par le centre du cube. Les gorges 5 sont plus profondes que les gorges 2.Ces gorges 5 sont symétriques par rapport au plan de symétrie du cube parallèle à la face 7.

Le cube 1 comporte une troisième paire de gorges 8 espacées le long d'un troisième axe 9 perpendiculaire aux axes 3, 6, aux plans médians des gorges 8 et à la face 10 du cube et passant par le centre du cube. Les gorges 8 sont symétriques par rapport au plan de symétrie 11 du cube. Par souci de clarté, les gorges 5, 8 n'ont pas été représentées sur la figure 3. La demi-vue de la figure 4, d'un côté du plan de symétrie 11 du cube perpendiculaire à l'axe 9, est coupée selon un plan passant par l'une des gorges 5 et perpendiculaire à l'axe 6. On a représenté sur la figure 4, le plan de symétrie 12 du cube perpendiculaire à l'axe 3.

Des paires de bobines ont été bobinées dans les paires de gorges ainsi ménagées. On a commencé par les gorges 8 les plus profondes sans dépasser le fond des gorges 5, avec des bobines 14, puis poursuivi par les gorges 5 sans dépasser le fond des gorges 2, avec des bobines non représentées par souci de clarté, et fini par les gorges 2, avec des bobines 13.

Dans chaque gorge d'une paire de gorges associées, le rayon de la spire moyenne est égal à l'écart entre des plans médians des deux gorges considérées.

On notera qu'on aurait pu aussi procéder d'une manière analogue à partir, non pas d'un cube, mais d'une sphère.

Exemple particulier de réalisation du radiateur

| | $\phi$min | $\phi$max | écart | largeur | n spires |
|---|---|---|---|---|---|
| axe 3 | 27 mm | 28,4 mm | 9,2 mm | 5 mm | 155 |
| axe 6 | 21,5 mm | 26,5 mm | 9 mm | 3 mm | 170 |
| axe 9 | 15 mm | 21 mm | 6 mm | 3 mm | 216 |

Le tableau ci-dessus fournit les caractéristiques des bobinages réalisés dans les gorges respectivement d'axes 3, 6, 9 ménagées dans un cube de 30 mm d'arête.

On notera que les gorges des bobinages sont des gorges à section, perpendiculaire à leur axe, ici annulaire.

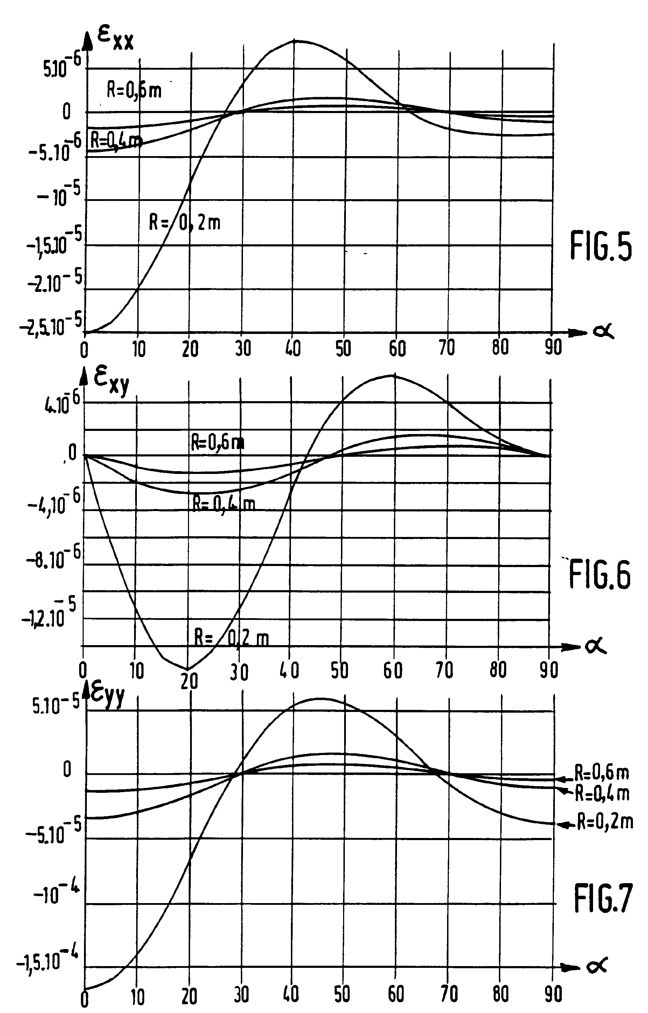

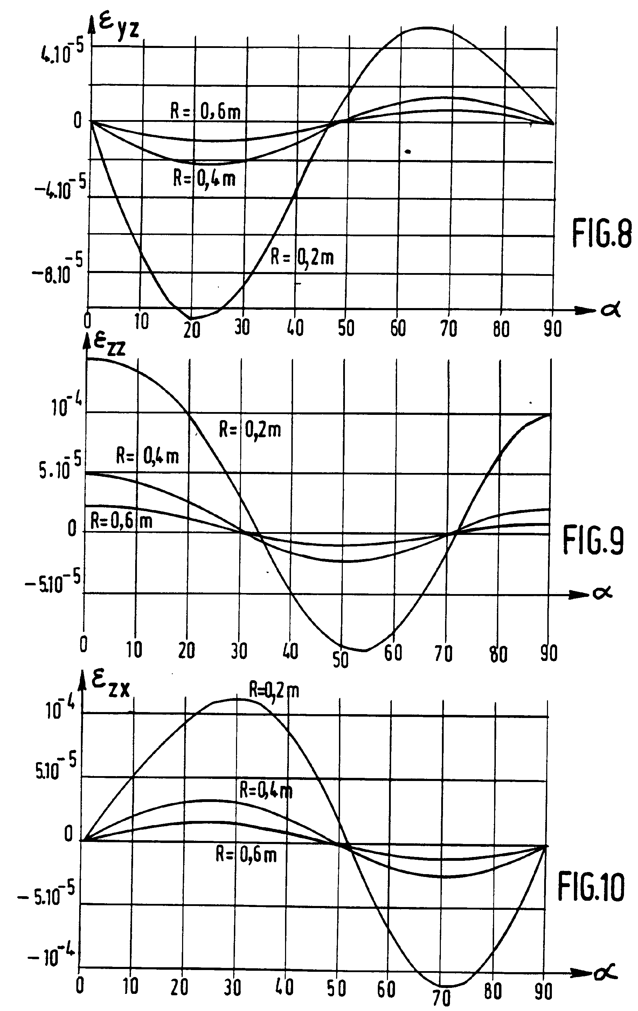

$\phi$min est ici le diamètre de la plus petite spire et $\phi$max le diamètre de la plus grande. L'écart est celui qui sépare les deux gorges. La largeur est celle des gorges. Le rayon moyen des bobinages associés est sensiblement égal à la somme de l'écart et de deux demi-largeurs de gorge. On notera que les bobinages comportent ici des nombres de spires tels que leur inductance est identique et égale à 1,010 mH. Les courbes d'erreur des figures 5-10 ont été tracées pour des distances, depuis le centre du radiateur, de 0,2 m, 0,4 m et 0,6 m le long des axes des bobines. On constate qu'à des distances de 0,4 ou 0,6 m, les erreurs du module de champ sont très faibles.

Le capteur de l'invention est réalisé de façon tout-à-fait similaire de celle du radiateur, à une exception près. Les bobines d'axe correspondant à l'axe 9, donc les plus petites, sont tellement petites et rapprochées l'une de l'autre, dans une gorge unique, qu'elles n'en forment qu'une. Pour cette paire virtuelle de bobines, les conditions d'Helmholtz restent quand-même réunies au niveau des deux spires moyennes des bobines réunies.

Exemple particulier de réalisation du capteur

Les symboles relatifs au radiateur sont repris primés pour le capteur dans leur même signification. Ainsi, le capteur est réalisé à partir d'un cube 1' dans lequel ont été ménagées une gorge 8' et deux paires de gorges 5', 2', d'axes de réception orthogonaux respectifs 9', 6', 3'.

| | $\phi$min | $\phi$max | écart | largeur |
|---|---|---|---|---|
| axe 3' | 11 mm | 13 mm | 4 mm | 2 mm |
| axe 6' | 8 mm | 10 mm | 2,5 mm | 2 mm |
| axe 9' | 4 mm | 7 mm | | 5 mm |

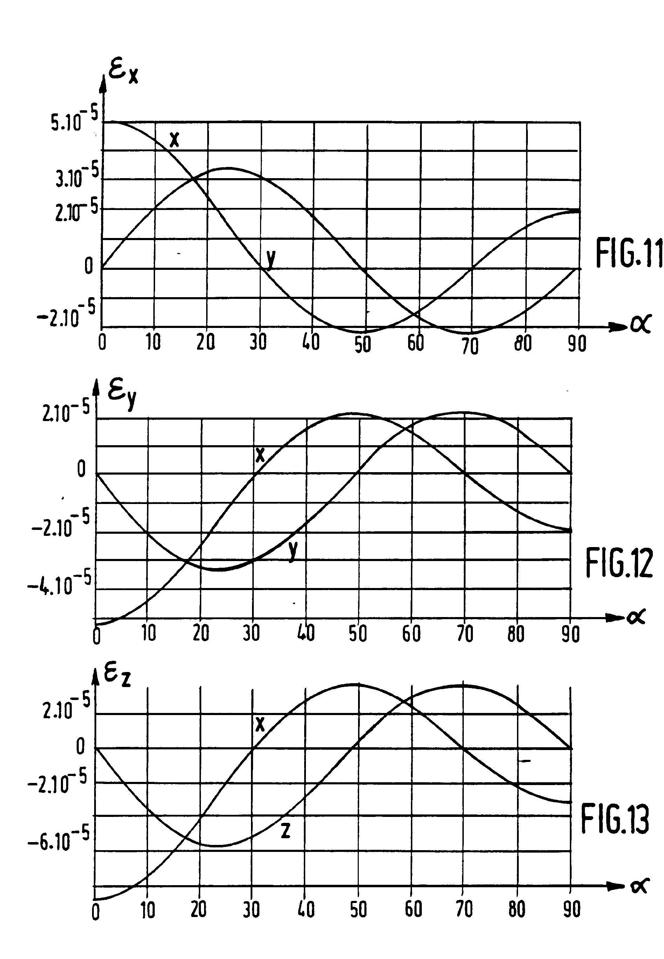

Les courbes d'erreur des figures 11-13 ont été tracées pour une distance, depuis le centre du capteur, de 0,2 m le long des axes Ox, Oy (X, Y), Oy, Ox (Y, X) et Oz, Ox (Z, X), respectivement.

## Revendications

1. Radiateur magnétique pour la détermination de la position et de l'orientation d'un mobile, comprenant au moins deux paires de bobines disposées respectivement le long de deux axes orthogonaux d'émission, caractérisé par le fait que les bobines (2, 5, 8) de chaque paire sont des bobines d'Helmholtz.

2. Radiateur selon la revendication 1, dans lequel il est prévu trois axes orthogonaux d'émission (3, 6, 9).

3. Radiateur selon la revendication 2, dans lequel les émissions dans les trois axes (3, 6, 9) s'effectuent l'une après l'autre.

4. Radiateur selon l'une des revendications 1 à 3, dans lequel les bobines sont enroulées dans des paires de gorges (2, 5, 8) d'axes (3, 6, 9) respectivement orthogonaux.

5. Radiateur selon la revendication 4, dans lequel les gorges (2, 5, 8) ont des profondeurs respectivement différentes.

6. Radiateur selon l'une des revendications 4 et 5, dans lequel les gorges (2, 5, 8) sont ménagées dans un cube (1).

7. Capteur magnétique pour la détermination de la position et de l'orientation d'un mobile, comprenant au moins deux paires de bobines disposées respectivement le long de deux axes orthogonaux de réception, caractérisé par le fait que les bobines (2′, 5′, 8′) de chaque paire sont des bobines d'Helmholtz.

8. Capteur selon la revendication 7, dans lequel il est prévu trois axes orthogonaux de réception (3′, 6′, 9′).

9. Capteur selon l'une des revendications 7 et 8, dans lequel les bobines sont enroulées dans des paires de gorges (2′, 5′, 8′) d'axes (3′, 6′, 9′) respectivement orthogonaux.

10. Capteur selon la revendication 9, dans lequel les gorges (2′, 5′, 8′) ont des profondeurs respectivement différentes.

11. Capteur selon l'une des revendications 9 et 10, dans lequel les deux gorges d'une des paires de gorges ont des largeurs telles que les deux gorges n'en forment qu'une seule (8′).

12. Capteur selon l'une des revendications 9 à 11, dans lequel les gorges (2′, 5′, 8′) sont ménagées dans un cube (1′) .

13. Ensemble d'un radiateur selon la revendication 1 et d'un capteur selon la revendication 7 pour la détermination de la position et de l'orientation d'un mobile, le produit du nombre d'axes d'émission (3, 6, 9) du radiateur (1) et du nombre d'axes de réception (3′, 6′, 9′) du capteur (1′) étant au moins égale à six.

**Patentansprüche**

1. Magnetischer Strahler zur Bestimmung der Position und der Orientierung eines beweglichen Gegenstandes, umfassend wenigstens zwei Spulenpaare, die jeweils längs zweier orthogonaler Sendeachsen angeordnet sind, dadurch gekennzeichnet, daß die Spulen (2, 5, 8) eines jeden Paars Helmholtzspulen sind.

2. Strahler nach Anspruch 1, dadurch gekennzeichnet, daß drei orthogonale Sendeachsen (3, 6, 9) vorhanden sind.

3. Strahler nach Anspruch 2, dadurch gekennzeichnet, daß die Abstrahlungen in den drei Achsen (3, 6, 9) nacheinander erfolgen.

4. Strahler nach einem der Ansprüche 1 bis 3, dadurch gekennzeichnet, daß die Spulen in Paaren von Nuten (2, 5, 8) gewikkelt sind, deren Achsen (3, 6, 9) jeweils orthogonal sind.

5. Strahler nach Anspruch 4, dadurch gekennzeichnet, daß die Nuten (2, 5, 8) jeweils unterschiedliche Tiefe aufweisen.

6. Strahler nach Anspruch 4 oder 5, dadurch gekennzeichnet, daß die Nuten (2, 5, 8) in einem Würfel (1) eingearbeitet sind.

7. Magnetaufnehmer zur Bestimmung der Position und der Orientierung eines beweglichen Gegenstandes, umfassend wenigstens zwei Spulenpaare, die jeweils längs zweier orthogonaler Empfangsachsen angeordnet sind, dadurch gekennzeichnet, daß die Spulen (2′, 5′, 8′) eines jedes Paars Helmholtzspulen sind.

8. Aufnehmer nach Anspruch 7, dadurch gekennzeichnet, daß drei orthogonale Empfangsachsen (3′, 6′, 9′,) vorhanden sind.

9. Aufnehmer nach Anspruch 7 oder 8, dadurch gekennzeichnet, daß die Spulen in Paare von Nuten (2′, 5′, 8′) gewickelt sind, deren Achsen (3′, 6′, 9′) jeweils orthogonal sind.

10. Aufnehmer nach Anspruch 9, dadurch gekennzeichnet, daß die Nuten (2′, 5′, 8′) jeweils unterschiedliche Tiefe aufweisen.

11. Aufnehmer nach Anspruch 9 oder 10, dadurch gekennzeichnet, daß beiden Nuten eines Paars von Nuten so breit sind, daß die beiden Nuten eine einzige Nut bilden (8′).

12. Aufnehmer nach einem der Ansprüche 9 bis 11, dadurch gekennzeichnet, daß die Nuten (2′, 5′, 8′) in einem Würfel (1′) eingearbeitet sind.

13. Aus einem Strahler nach Anspruch 1 und einem Aufnehmer nach Anspruch 7 gebildete Einheit zur Bestimmung der Position und der Orientierung eines beweglichen Gegenstands, wobei das Produkt aus der Anzahl der Sendeachsen (3, 6, 9) des Strahlers (1) und der Anzahl der Empfangsachsen (3', 6', 9') des Aufnehmers (1') mindestens gleich sechs ist.

**Claims**

1. A magnetic emitting device for determining the position and orientation of a moving body, comprising at least two pairs of coils disposed respectively along two orthogonal emission axes, characterised in that the coils (2, 5, 8) of each pair are Helmholtz coils.

2. An emitting device according to claim 1, in which three orthogonal emission axes (3, 6, 9) are provided.

3. An emitting device according to claim 2, in which the emissions along the three axes (3, 6, 9) are carried out one after the other.

4. An emitting device according to one of claims 1 to 3, in which the coils are wound in pairs of grooves (2, 5, 8) the axes (3, 6, 9) of which are respectively orthogonal.

5. An emitting device according to claim 4, in which the grooves (2, 5, 8) are of respectively different depths.

6. An emitting device according to one of claims 4 and 5, in which the grooves (2, 5, 8) are formed in a cube (1).

7. A magnetic sensor for determining the position and orientation of a moving body, comprising at least two pairs of coils disposed respectively along two orthogonal reception axes, characterised in that the coils (2', 5', 8') of each pair are Helmholtz coils.

8. A sensor according to claim 7, in which three orthogonal reception axes (3', 6', 9') are provided.

9. A sensor according to one of claims 7 and 8, in which the coils are wound in pairs of grooves (2', 5', 8') of axes (3', 6', 9') which are respectively orthogonal.

10. A sensor according to claim 9, in which the grooves (2', 5', 8') are of respectively different depths.

11. A sensor according to one of claims 9 and 10, in which the two grooves of one of the pairs of grooves are of such widths that the two grooves only form one (8') of them.

12. A sensor according to one of claims 9 to 11, in which the grooves (2', 5', 8') are formed in a cube (1').

13. An assembly of an emitting device according to claim 1 and a sensor according to claim 7 for determining the position and orientation of a moving body, the sum of the number of emission axes (3, 6, 9) of the emitting device (1) and of the number of reception axes (3', 6', 9') of the sensor (1') being at least equal to six.

FIG.1

FIG.2

FIG.3

FIG.4

FIG.5

FIG.6

FIG.7

FIG.8

FIG.9

FIG.10

12

FIG.11

FIG.12

FIG.13